# EUROPEAN PATENT SPECIFICATION

(11) **EP 2 782 770 B1**
(45) Date of publication and mention of the grant of the patent: **13.01.2016**
(21) Application number: 12808469.6
(22) Date of filing: 19.11.2012
(51) Int. Cl.: B60K 1/00

(54) **VEHICULAR TORQUE ROD AND SUPPORTING STRUCTURE FOR POWER UNIT**
DREHMOMENTSTANGE UND STÜTZSTRUKTUR FÜR DIE ANTRIEBSEINHEIT EINES FAHRZEUGES
BIELLE DE POUSSÉE POUR VÉHICULE ET STRUCTURE DE POUSSÉE POUR BLOC MOTEUR

(30) Priority: 25.11.2011 JP 2011257459
(43) Date of publication of application: 01.10.2014
(73) Proprietor: TOYOTA JIDOSHA KABUSHIKI KAISHA, Toyota-shi, Aichi-ken, 471-8571 (JP)
(72) Inventor: KAMBAYASHI, Taku, Toyota-shi, Aichi-ken, 471-8571 (JP); SAMURA, Toshiki, Toyota-shi, Aichi-ken, 471-8571 (JP)
(74) Representative: Jackson, Martin Peter
(86) International application number: PCT/IB2012/002596
(87) International publication number: WO 2013/076574

(56) References cited:
- WO-A1-02/42661
- JP-A- 2002 274 194
- JP-A- 2005 098 515
- JP-A- 2011 220 396

## Description

### BACKGROUND OF THE INVENTION

### 1. Field of the Invention

The invention relates to a vehicular torque rod and a supporting structure for a power unit.

### 2. Description of Related Art

Japanese Patent Application Publication No. 2010-274912 (JP 2010-274912 A) discloses a power plant supporting structure. In this structure, a rear lower portion of a power plant is coupled and supported by a suspension cross member via a torque rod. While a pair of mount members adjacent to a roll inertia main axis mainly attenuates vibration in the power plant, the torque rod restricts vibration in the power plant around the roll inertia main axis.

Here, in the case where the vehicular torque rod has a plurality of resonance modes, a conventional method, in which a vibration control mass and/or a vibration absorbing rubber is mounted in an end portion of the torque rod, simply reduces vibration in part of resonance modes. There has been a room for improvement in vibration reduction.

JP 2005-098515 discloses a vehicular torque rod according to the pre-characterizing section of claim 1.

JP 2002-274194 discloses that a straight torque rod can bend in a collision.

### SUMMARY OF THE INVENTION

The invention provides a vehicular torque rod and a supporting structure for a power unit, with which it is possible to reduce vibration even when a plurality of resonance modes occur.

A vehicular torque rod according to a first aspect of the invention includes: a torque rod main body that has one end portion and the other end portion in a longitudinal direction of the torque rod main body, the one end portion being joined to a power unit, the other end portion being joined to a body-side joint portion, the torque rod main body coupling and supporting the power unit with the body-side joint portion; and a weight member disposed on an intermediate portion of the torque rod main body in the longitudinal direction, the torque rod main body includes a bend start portion that is disposed on one end portion side or the other end portion side in the longitudinal direction with respect to the weight member and that is configured to become a starting point of bending deformation of the torque rod main body when a vehicle collision that causes the bending deformation occurs.

The torque rod has a plurality of resonance modes caused by vibration transmitted from the power unit. The resonant frequency of a translational resonance mode among the plurality of resonance modes is shifted to a lower frequency by the weight member disposed on the intermediate portion of the torque rod main body in the longitudinal direction. However, the resonant frequency of a rotational resonance mode among the plurality of resonance modes is not shifted so much or is shifted little even when the weight member is disposed on the intermediate portion of the torque rod main body in the longitudinal direction.

That is, by disposing the weight member on the intermediate portion of the torque rod main body, it is possible to greatly shift the resonant frequency of the translational resonance mode without shifting the resonant frequency of the rotational resonance mode much or almost without changing it. In this way, the resonant frequency of the translational resonance mode is separated from the resonant frequency of the rotational resonance mode, so that it is possible to reduce vibration in the torque rod main body.

The bend start portion may be a bent portion, at which the torque rod main portion is bent.

Since the torque rod main body includes the bend start portion that is disposed on one end portion side or the other end portion side in the longitudinal direction with respect to the weight member and that is configured to become a starting point of the bending deformation, the torque rod main body can bend and deform starting from the bend start portion while the weight member does not hinder the bending. The bending deformation of the torque rod main body starting from the bend start portion effectively absorbs impact at the time of a vehicle collision. Accordingly, compared with a configuration without the bend start portion in the torque rod main body, effective absorption of impact at the time of a vehicle collision is ensured.

In the vehicular torque rod according to the first aspect, the weight member may have a recess portion, and the torque rod main body may be inserted into the recess portion and fixed to the weight member.

When the recess portion of the weight member is fitted onto the torque rod main body for fixation, the weight member is easily disposed on the intermediate portion of the torque rod main body.

In the vehicular torque rod according to the first aspect, a position of a center of gravity of the torque rod main body and a position of a center of gravity of the weight member may substantially coincide with each other at least one of in the longitudinal direction and in a cross section taken along a plane perpendicular to the longitudinal direction.

In the vehicular torque rod according to the first aspect, the torque rod main body may have a U-shaped cross section that is open on a side, on which the torque rod main body becomes convex when the torque rod main body is subjected to bending deformation.

When the torque rod main body has the U-shaped cross section open on the convex side of the bend start portion, the torque rod main body bends and deforms more easily staring from the bend start portion compared with a configuration without the opening at the convex side. This improves impact absorption performance at the time of a vehicle collision. Accordingly, compared with a configuration without the opening at the convex side, impact absorption performance at the time of a vehicle collision is improved.

A supporting structure for a power unit according to a second aspect of the invention includes: a body-side joint portion disposable at a rear side or a front side of a power unit in a vehicle longitudinal direction when the power unit is housed in a power unit room of a vehicle; and the vehicular torque rod according to the first aspect that is suitable for coupling and supporting the power unit with the body-side joint portion.

The vibration transmitted from the power unit causes the plurality of resonance modes in the torque rod. Adjusting the weight of the weight member as needed separates (disperses) the resonant frequency of the translational resonance mode from the resonant frequency of the rotational resonance mode, thus reducing vibration in the torque rod main body to improve noise and vibration (NV) performance.

In addition, at the time of a vehicle frontal collision or vehicle rear collision, the torque rod main body bends and deforms, thus absorbing impact in the vehicle collision.

The supporting structure for the power unit according to the second aspect, may be part of a vehicle. The vehicle may comprise a power unit which includes a driving shaft disposed coaxially with a drive shaft connected to a driving wheel.

When the power unit has a configuration, in which the driving shaft is disposed coaxially with the drive shaft, that is, what is called a uniaxial configuration, a large space between the rear side or the front side of the power unit in the vehicle longitudinal direction and the body-side joint portion is secured. Thus, it is possible increase the length of the torque rod main body of the vehicular torque rod that couples and supports the power unit with the body-side joint portion, so that a deformation stroke of the torque rod main body can be increased and it is possible to improve impact absorption performance at the time of a vehicle collision.

On the other hand, when the length of the torque rod main body increased, a resonant frequency of the translational resonance mode and a resonant frequency of the rotational resonance mode tend to be brought closer to each other or to the same frequency, which intensifies the vibration. That is, the long torque rod main body tends to degrade NV performance. However, when the weight member is disposed on the intermediate portion of the torque rod main body in the longitudinal direction, and the resonant frequency of the translational resonance mode is separated from the resonant frequency of the rotational resonance mode, vibration in the torque rod main body is reduced and NV performance is improved. Therefore, effective absorption of collision energy is ensured and NV performance is improved at the same time.

A supporting structure for a power unit according to a third aspect of the invention includes: a body-side joint portion disposable at a rear side or a front side of a power unit in a vehicle longitudinal direction when the power unit is housed in a power unit room of a vehicle; and the vehicular torque rod according to the first aspect that is suitable for coupling and supporting the power unit with the body-side joint portion, wherein the torque rod main body has a U-shaped cross section that is open on a lower side in a vehicle vertical direction. The weight member may have a recess portion fitted onto the torque rod main body and be fixed to the torque rod main body in a state where the recess portion opens at the lower side in the vehicle vertical direction.

When the lower side in the vehicle vertical direction is open, unlike a configuration with the upper side in the vehicle vertical direction open, for example, water, dirt, and a similar object are prevented from remaining, and thus, rust, corrosion, and a similar trouble due to remaining water, dirt, and similar object are prevented.

In the supporting structure for the power unit according to the third aspect, the torque rod main body may include the bend start portion that is disposed on the one end portion side or said the other end portion side in the longitudinal direction with respect to the weight member and that is configured to become, at the time of the vehicle collision, a starting point of the bending deformation such that the lower side in the vehicle vertical direction becomes convex.

This configuration allows the torque rod main body to bend and deform starting from the bend start portion. Since the lower side of the torque rod main body in the vehicle vertical direction, on which side the torque rod main body becomes convex at the time of bending deformation, is open, the torque rod main body bends and deforms more easily staring from the bend start portion, compared with a configuration without the opening at the convex side. This improves impact absorption performance at the time of a vehicle collision.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a side view schematically illustrating a vehicle front portion that includes a supporting structure for a motor unit according to an embodiment of the invention;
FIG 2 is an enlarged perspective view schematically illustrating a motor unit and its peripheral portion shown in FIG. 1;
FIG. 3A is an enlarged plan view of a torque rod according to the embodiment of the invention;
FIG. 3B is a side view of the torque rod according to the embodiment of the invention;
FIG 3C is a cross-sectional view taken along the line C-C of FIG. 3B,
FIG. 4 is an enlarged perspective view illustrating the torque rod according to the embodiment of the invention;
FIGs. 5A to 5F are explanatory diagrams illustrating six types of resonance modes that occur in the torque rod shown in FIG. 4; and
FIG. 6 is a side view for size comparison between a reciprocating engine and the motor unit shown in FIG. 1.

### DETAILED DESCRIPTION OF EMBODIMENTS

Description will be given of one embodiment of the invention below with reference to the accompanying drawings. In each drawing, an arrow UP, an arrow FR, and an arrow OUT are respectively directed to an upper side in a vehicle vertical direction, a front side in the vehicle longitudinal or longitudinal direction, and an outer side (a right side) in the vehicle width or lateral direction. This embodiment employs a vehicle driven by an electric motor, what is called an electric vehicle.

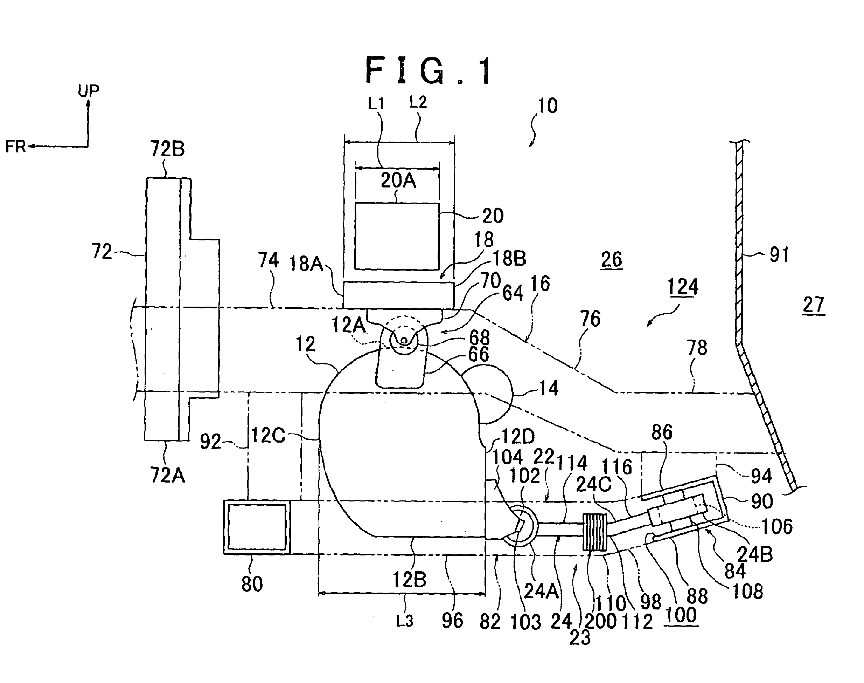

As illustrated in FIG 1, a supporting structure 10 of a power unit according to one embodiment of the invention includes a motor unit 12, a suspension member rear portion 84, and a torque rod 23. The suspension member rear portion 84 is disposed at the rear side of the motor unit 12 in the vehicle longitudinal direction. The torque rod 23 couples and supports the motor unit 12 with the suspension member rear portion 84.

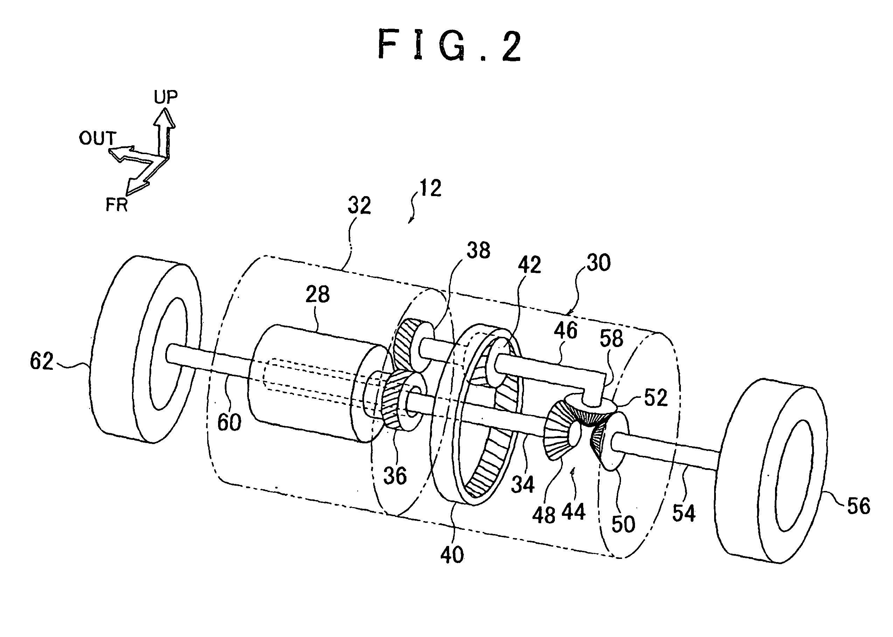

In this embodiment, the motor unit 12 is used for driving front wheels, and housed in a motor room (power unit room) 26 in the front portion of the vehicle. As illustrated in FIG. 2, the motor unit 12 includes an electric motor 28, a transaxle 30, and a motor case 32, which houses the electric motor 28 and is integrated with the transaxle 30. The electric motor 28 includes a driving shaft (output shaft) 34, the axial direction of which coincides with the vehicle width direction.

The transaxle 30 includes a sun gear 36, a pinion gear 38, an internal gear 40, a planetary gear 42, and a differential gear 44. The sun gear 36 is disposed in an intermediate portion of the driving shaft 34 in the axial direction. The pinion gear 38 is engaged with the sun gear 36. The pinion gear 38 is disposed at one end portion of a revolution shaft 46, which is disposed parallel to the driving shaft 34. The driving shaft 34 and the revolution shaft 46 are inserted into inside of the internal gear 40.

The internal gear 40 is disposed coaxially with the driving shaft 34, and engaged with the planetary gear 42, which is disposed in an intermediate portion of the revolution shaft 46 in the axial direction. The differential gear 44 includes three pinion gears 48, 50, and 52. The pinion gear 48 is disposed at one end portion of the driving shaft 34 while the pinion gear 50 is disposed at one end portion of one drive shaft 54. The drive shaft 54 is disposed coaxially with the driving shaft 34, and coupled to one front wheel (driving wheel) 56.

The revolution shaft 46 has the other end portion where a bent portion 58 is formed. The bent portion 58 is bent so that the extended line thereof intersects with the extended line of the driving shaft 34. The bent portion 58 has a distal end portion to which the pinion gear 52 is fixed. This pinion gear 52 is engaged with the respective pinion gears 48 and 50. The driving shaft 34 has the other end portion where the other drive shaft 60 is formed integrally. The other drive shaft 60 is disposed coaxially with the driving shaft 34. This drive shaft 60 is coupled to the other front wheel (driving wheel) 62.

Accordingly, the aforementioned motor unit 12 has a configuration, what is called a uniaxial configuration, where the driving shaft (output shaft) 34 is disposed coaxially with the drive shafts 54 and 60.

As illustrated in FIG. 1, this motor unit 12 is such that a cross member 18 is fixed to a first horizontal portion 74 of each of front side members 16 and the motor unit 12 is fixed to the cross member 18 via a motor mount 64. More specifically, this motor mount 64 includes a mount main body 66, which is fixed to the motor unit 12, a bush 68, which is supported by the mount main body 66 and made of rubber, and a bracket 70, which couples the bush 68 and the first horizontal portion 74 together.

The cross member 18 is disposed at the upper side of the motor unit 12 in the vehicle vertical direction, and extends in the vehicle width direction. The cross member 18 has an end portion, which is arranged at the outer side in the vehicle width direction, coupled to a rear portion of the first horizontal portion 74. On the upper side of the cross member 18 in the vehicle vertical direction, an inverter 20, which is a high voltage component that supplies electric power to the motor unit 12 (the electric motor 28), is disposed.

At the front side of the motor unit 12 in the vehicle longitudinal direction, a radiator 72 (a cooling module) is disposed. The radiator 72 is disposed at the front side of the front side members 16 (the first horizontal portions 74) and a suspension member front portion 80, described later, in the vehicle longitudinal direction. The radiator 72 is arranged so that the thickness direction thereof coincides with the vehicle longitudinal direction, and the radiator 72 is formed in a flat box-shape that extends in the vehicle vertical direction and the vehicle width direction.

The radiator 72 has a lower end portion 72A between an upper end portion 12A and a lower end portion 12B of the motor unit 12 in the vehicle vertical direction. The radiator 72 has an upper end portion 72B on the upper side of an upper end portion 20A of the inverter 20 in the vehicle vertical direction.

The air compressor 14 is used to supply compressed air to a main body of an air conditioning unit (not shown), and mounted integrally with the motor unit 12 at the rear side of the motor unit 12 in the vehicle longitudinal direction. The air compressor 14 may be used to supply compressed air to a fuel cell (not shown).

Each of the front side members 16 is disposed at the outer side in the vehicle width direction with respect to the motor unit 12, and extends in the vehicle longitudinal direction. While in FIG. 1, one of the front side members 16 only is illustrated, the front side members 16 are disposed at both sides of the motor unit 12 in the vehicle width direction.

This front side member 16 includes the first horizontal portion 74, which extends in the vehicle longitudinal direction, an inclined portion 76, and a second horizontal portion 78. The inclined portion 76 is formed at the rear side of the first horizontal portion 74 in the vehicle longitudinal direction, and inclined toward the lower side with respect to the vehicle in a direction toward the rear side of the vehicle. The second horizontal portion 78 is formed at the rear side of the inclined portion 76 in the vehicle longitudinal direction, and extends in the vehicle longitudinal direction.

The aforementioned cross member 18 is arranged, in the vehicle longitudinal direction, between a front end portion 12C and a rear end portion 12D of the motor unit 12. The inverter 20 is arranged, in the vehicle longitudinal direction, between a front end portion 18A and a rear end portion 18B of the cross member 18. That is, the whole cross member 18 in the vehicle longitudinal direction overlaps an intermediate portion between the front end portion 12C and the rear end portion 12D of the motor unit 12 in the vehicle longitudinal direction. In the meantime, the whole inverter 20 in the vehicle longitudinal direction overlaps an intermediate portion between the front end portion 18A and the rear end portion 18B of the cross member 18 in the vehicle longitudinal direction.

In FIG 1, a length L1 indicates the length of the inverter 20 in the vehicle longitudinal direction while a length L2 indicates the length of the cross member 18 in the vehicle longitudinal direction. A length L3 indicates the length of the motor unit 12 in the vehicle longitudinal direction. The length L3 is longer than the length L2 while the length L2 is longer than the length L1 (L1 < L2 < L3).

The suspension member 22 is disposed at the lower side of the front side members 16 in the vehicle vertical direction. The suspension member 22 includes a suspension member front portion 80, suspension member side rails 82, and a suspension member rear portion 84. The suspension member front portion 80 extends in the vehicle width direction, and forms a front portion of the suspension member 22. Each of the suspension member side rails 82 extends in the vehicle longitudinal direction, and forms a side portion of the suspension member 22. The suspension member rear portion 84 extends in the vehicle width direction, and forms a rear portion of the suspension member 22.

The suspension member front portion 80 is disposed at the front side of a lower portion of the motor unit 12 in the vehicle longitudinal direction while each of the suspension member side rails 82 is disposed at the outer side in the vehicle width direction with respect to the lower portion of the motor unit 12. While in FIG. 1, one of the suspension member side rails 82 only is illustrated, the suspension member side rails 82 are disposed at both side portions of the suspension member 22.

The suspension member rear portion 84 is disposed at the rear side of the lower portion of the motor unit 12 in the vehicle longitudinal direction. The suspension member rear portion 84 includes a C-shaped cross section including an upper wall portion 86, a lower wall portion 88, and a rear wall portion 90.

Each of outer end portions of the suspension member front portion 80 in the vehicle width direction is fixed to a front portion of one of the first horizontal portions 74 via a bracket 92 extending in the vehicle vertical direction. Each of outer end portions of the suspension member rear portion 84 in the vehicle width direction is fixed to an intermediate portion of one of the second horizontal portions 78 in the vehicle longitudinal direction via a bracket 94 extending in the vehicle vertical direction. At the rear side of the suspension member rear portion 84 in the vehicle longitudinal direction, a dash panel 91 that extends in the vehicle vertical direction and provides a partition between the motor room 26 and a vehicle cabin 27, is disposed.

A portion of the suspension member side rail 82 at the front side in the vehicle longitudinal direction with respect to a rear portion of the suspension member side rail 82 is a horizontal portion 96 extending in the vehicle longitudinal direction. A rear portion of the suspension member side rail 82 is an inclined portion 98 that is inclined toward the upper side of the vehicle in a direction toward the rear side of the vehicle. Additionally, the suspension member rear portion 84 is also inclined corresponding to this inclination of the inclined portion 98, so that an opening 100 of the suspension member rear portion 84 at the front side thereof in the vehicle longitudinal direction is open toward the front side of the vehicle and the lower side of the vehicle.

As described above, the longitudinal direction of the torque rod 23 coincides with the vehicle longitudinal direction, and couples and supports the motor unit 12 with the suspension member rear portion (a body-side joint portion) 84.

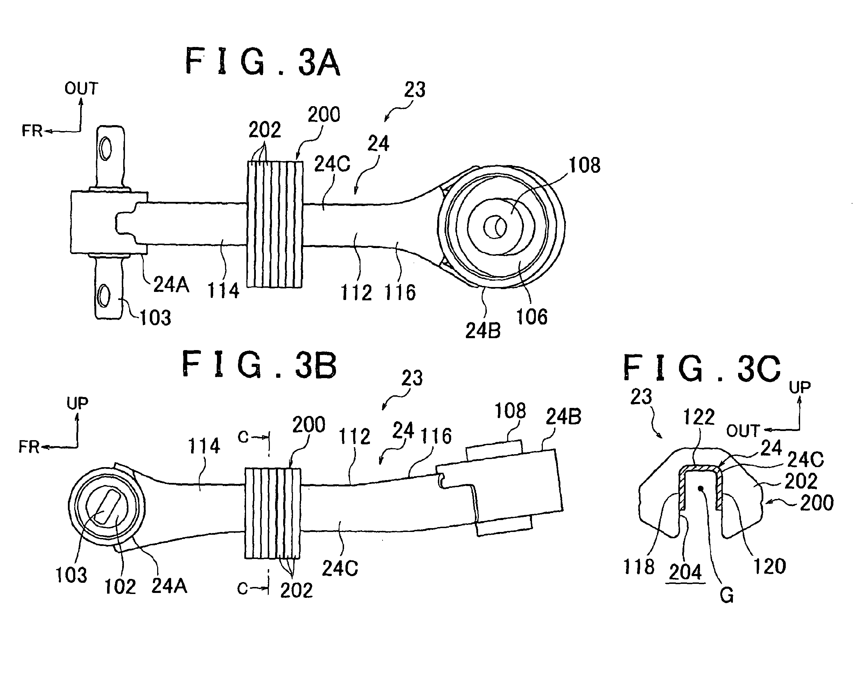

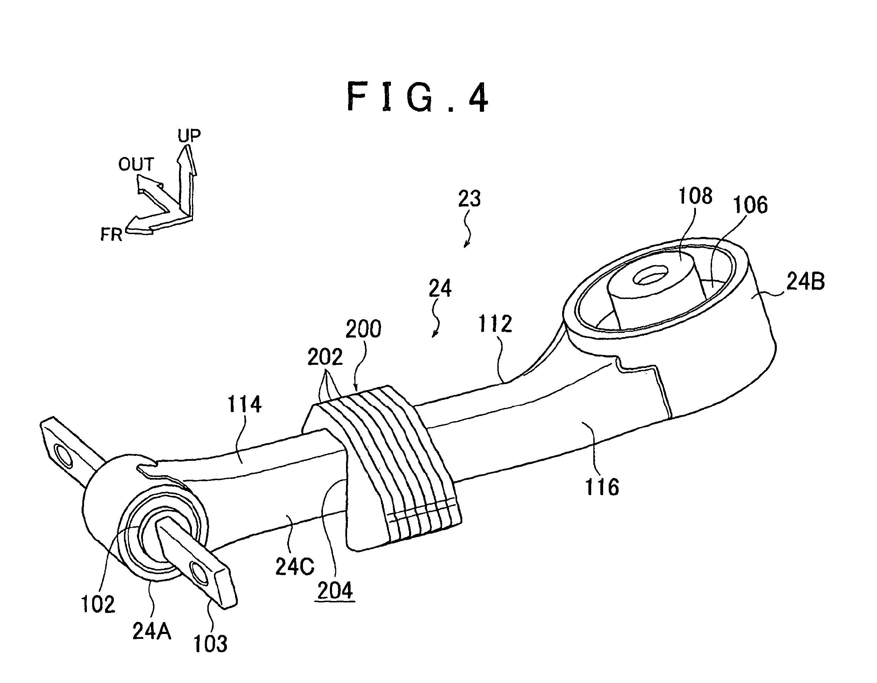

As illustrated in FIGs. 3A to 3C and FIG. 4, the torque rod 23 includes a torque rod main body 24 and a weight member 200, which is disposed on an intermediate portion of the torque rod main body 24 in the longitudinal direction.

A front end portion 24A of the torque rod main body 24 has a cylindrical shape, in which the penetration direction coincides with the vehicle width direction, and a bush 102 made of rubber and a shaft portion 103, the axial direction of which coincides with the vehicle width direction, are passed through the front end portion 24A. A rear end portion 24B of the torque rod main body 24 has a cylindrical shape, in which the penetration direction coincides with the vehicle vertical direction, and a bush 106 made of rubber and a shaft portion 108, the axial direction of which coincides with the vehicle vertical direction, are disposed in the rear end portion 24B. In this embodiment, the diameter of the cylinder of the rear end portion 24B is larger than the diameter of the cylinder of the front end portion 24A.

As illustrated in FIG 1, both axial end portions of the shaft portion 103 of the front end portion 24A of the torque rod main body 24 are fixed to a lower end portion of a rear surface of the motor unit 12 via the bracket 104. The rear end portion 24B of the torque rod main body 24 are housed in the suspension member rear portion 84. Upper and lower axial end portions of the shaft portion 108 are fixed to the upper wall portion 86 and the lower wall portion 88, respectively.

The torque rod main body 24 includes a bent portion 112 (see FIG 3B and FIG 4) at the rear side in the vehicle longitudinal direction with respect to the intermediate portion in the longitudinal direction (in the axial direction, or the vehicle longitudinal direction). In this embodiment, the bent portion 112 is formed at a position corresponding to a bent portion 110 between the horizontal portion 96 and the inclined portion 98 in the above-described suspension member side rail 82. When a collision load is applied to the torque rod 23 from the front side in the vehicle longitudinal direction, this bent portion 112 becomes a starting point of bending deformation toward a lower side of the torque rod main body 24 in the vehicle vertical direction. The bent portion 112 is bent to form a convex shape toward the lower side in the vehicle vertical direction.

As illustrated in FIGs. 3A to 3C and FIG 4, a portion of the torque rod main body 24 at the front side of the bent portion 112 in the vehicle longitudinal direction is a horizontal portion 114 that extends in the vehicle longitudinal direction. A portion of the torque rod main body 24 at the rear side of the bent portion 112 in the vehicle longitudinal direction is an inclined portion 116 that extends toward the upper side in the vehicle vertical direction in a direction toward the rear side in the vehicle longitudinal direction.

As illustrated in FIG. 3C, a main body portion 24C of the torque rod main body 24 between the front end portion 24A and the rear end portion 24B includes a pair of sidewall portions 118 and 120, which face each other in the vehicle width direction, and an upper wall portion 122, which connects the pair of sidewall portions 118 and 120 at their upper end portions, so that the main body portion 24C is formed to have an inverse U-shaped cross section. That is, the main body portion 24C of the torque rod main body 24 has a U-shaped cross section open toward the lower side in the vehicle vertical direction. The main body portion 24C has a constant cross section throughout the whole length in the longitudinal direction of the main body portion 24C.

As illustrated in FIGs. 3A to 3C and FIG. 4, the weight member 200 is disposed on the horizontal portion 114 of the torque rod main body 24, adjacent to the front side of the bent portion 112 in the vehicle longitudinal direction. The weight member 200 is disposed on an intermediate portion of the torque rod main body 24 in the longitudinal direction (in the axial direction, or the vehicle longitudinal direction).

From a different point of view, the weight member 200 is disposed at or in the vicinity of the centroid (the center of gravity) of the torque rod main body 24 (its main body portion 24C) in a longitudinal section taken along the longitudinal direction (in the axial direction, or the vehicle longitudinal direction). Further, this embodiment is designed so that the centroid (the center of gravity) of the torque rod main body 24 (its main body portion 24C) coincides or substantially coincides with the centroid (the center of gravity) of the weight member 200 in the longitudinal direction (in the axial direction, or vehicle longitudinal direction).

As illustrated in FIG. 3C, the weight member 200 includes a plurality of plate-shaped mass dampers 202, which are stacked in the longitudinal direction of the torque rod main body 24. The profile of each mass damper 202 is generally a horizontally elongated octagon shape when viewed in the longitudinal direction. The mass damper 202 has a recess portion 204 that has approximately a rectangular shape and is open at the lower side in the vehicle vertical direction, in other words, at the same side as the opening side of the torque rod main body 24. Each mass damper 202 is mounted so that the recess portion 204 is fitted onto the torque rod main body 24 from the upper side in the vehicle vertical direction of the vehicle, and is bonded by welding, whereby the respective mass dampers 202 (the weight member 200) are fixed to the torque rod main body 24.

In addition, this embodiment is designed so that the position of the centroid (the center of gravity) of the cross section of the torque rod main body 24 coincides or approximately coincides with the position of the centroid (the center of gravity) of the cross section of the weight member 200, the cross sections being taken along a plane perpendicular to the longitudinal direction of the torque rod main body 24. These positions of the centroids (the centers of gravity) are illustrated as a point G.

Next, description will be given of operations and effects according to one embodiment of the invention.

The torque rod main body 24 of the torque rod 23 includes the bent portion 112 from which the bending deformation starts. Accordingly, when a frontal collision of the vehicle occurs, the torque rod 23 (the torque rod main body 24) is bent and deformed from the bent portion 112 as the starting point so that the torque rod 23 becomes convex downward in the vehicle vertical direction. This improves impact absorption performance of the torque rod 23 when a frontal collision of the vehicle occurs.

The weight member 200 is disposed at the front side in the vehicle longitudinal direction with respect to the bent portion 112. Thus, the weight member 200 does not hinder bending deformation of the torque rod main body 24.

In addition, the torque rod main body 24 of the torque rod 23 has a U-shaped cross section that is open on the convex side (on the lower side in the vehicle vertical direction). Accordingly, compared with a configuration, in which a convex side is not open, this configuration allows the torque rod main body 24 to bend and deform more easily. This improves impact absorption performance in a vehicle collision.

The bent portion 112 is set such that the convex side is positioned on the lower side in the vehicle vertical direction. The torque rod main body 24 and the weight member 200 each have a shape open on the lower side in the vehicle vertical direction, toward which side the bent portion 112 is concave. Thus, this prevents, for example, water, dirt, and the like from remaining inside of the torque rod main body 24 and the weight member 200, thus preventing rust, corrosion, and the like due to the remaining water, dirt, and the like.

As illustrated in FIG. 2, the motor unit 12 for driving the front wheel has a configuration, in which the driving shaft (output shaft) 34 is disposed coaxially with the drive shafts 54 and 60, what is called a uniaxial configuration. Accordingly, as illustrated in FIG. 1, the uniaxial configuration of the motor unit 12 secures a space 124 at the rear side of the motor unit 12 in the vehicle longitudinal direction. In addition, since the torque rod 23 is disposed in the space 124 at the rear side of the motor unit 12, which space is secured by the uniaxial configuration of the motor unit 12, so that a sufficient length in the vehicle longitudinal direction is ensured.

Additionally, in this embodiment, the motor unit 12 is fixed to the cross member 18, which is fixed to the first horizontal portions 74 of the front side members 16, via the motor mount 64. The suspension member rear portion 84 is fixed to the second horizontal portions 78 of the front side members 16. Thus, for example, compared with a configuration, in which the motor unit 12 or the suspension member rear portion 84 is fixed to the inclined portions 76 of the front side members 16, it is ensured that the torque rod 23 that connects the motor unit 12 and the suspension member rear portion 84 has a longer length.

Accordingly, since the torque rod 23 (the torque rod main body 24) is long in the longitudinal direction and a large deformation stroke is therefore secured, impact when a frontal collision of a vehicle occurs is efficiently absorbed. That is, since the torque rod 23 according to this embodiment is long in the longitudinal direction, impact absorption performance (impact attenuation performance) is improved.

Here, vibration of the motor unit 12 (the electric motor 28), gear noise of various gears of the transaxle 30, pulsation vibration of the air compressor 14, and the like are transmitted to the torque rod 23. These transmitted vibrations cause a plurality of resonance modes in the torque rod 23.

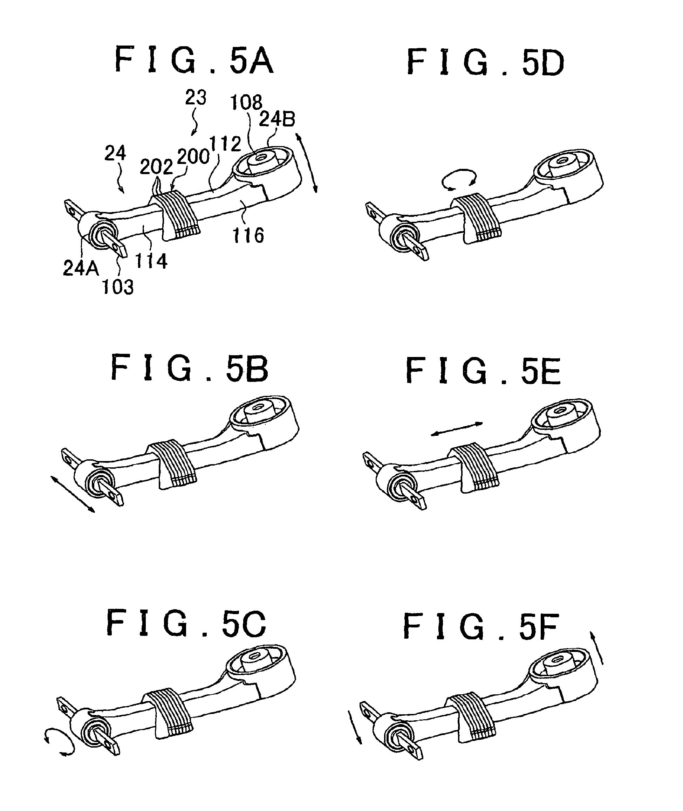

Specifically, the torque rod 23 according to this embodiment has six types of resonance modes as illustrated in FIGs. 5A to 5F. The respective drawings of FIGs. 5A to 5F are all the same drawings, and are also the same drawings as that in FIG. 4 except the size of drawings. For this reason, to avoid complication of the drawings, the minimum number of reference numerals only are given in FIG. 5A while no reference numeral is given in the other drawings.

FIG 5A illustrates a resonance mode of vertical displacement where the rear end portion 24B is displaced in the vehicle vertical direction. FIG. 5B illustrates a resonance mode of lateral displacement where the front end portion 24A is displaced in the vehicle width direction. FIG 5C illustrates a resonance mode of rotational displacement (pitch) where rotation occurs around an axis along the longitudinal direction as a rotation axis. FIG. 5D illustrates a resonance mode of rotational displacement (yaw) where rotation occurs around an axis, which passes through the intermediate portion (the weight member 200), along the vehicle vertical direction as a rotation axis. FIG. 5E illustrates a resonance mode of forward and backward displacement in a direction along the longitudinal direction. FIG. 5F illustrates a resonance mode of rotational displacement (roll) where rotation occurs around an axis, which passes through the intermediate portion (the weight member 200), along the vehicle width direction as a rotation axis.

The six types of resonance modes include three translational resonance modes in FIGs. 5A, 5B, and 5E and three rotational resonance modes in FIGs. 5C, 5D, and 5F.

Forming the torque rod main body long in the longitudinal direction causes a resonant frequency of the translational resonance mode and a resonant frequency of the rotational resonance mode to be close to each other or the same frequency. Thus, this vibration tends to become large. That is, the long torque rod main body tends to degrade noise and vibration (NV) performance.

However, the torque rod 23 according to this embodiment includes the weight member 200 on the intermediate portion of the torque rod main body 24 in the longitudinal direction. The resonant frequencies of the translational resonance modes among the plurality of resonance modes described above are shifted to lower frequencies by the weight member 200 on the intermediate portion of the torque rod main body 24 in the longitudinal direction, compared with a case where the weight member 200 is not disposed. However, the resonant frequencies of the rotational resonance modes among the plurality of resonance modes are not shifted much or are shifted little (the shift is small) even in the case where the weight member 200 is disposed on the intermediate portion of the torque rod main body 24 in the longitudinal direction.

That is, by providing the weight member 200 on the intermediate portion of the torque rod main body 24 in the longitudinal direction, the resonant frequencies of the translational resonance modes are significantly changed without changing the resonant frequencies of the rotational resonance modes much (or almost without changing them).

Thus, the torque rod 23 according to this embodiment reduces vibration by sufficiently separating (dispersing) the resonant frequencies of the translational resonance modes from the resonant frequencies of the rotational resonance modes by providing the weight member 200 on the intermediate portion of the torque rod main body 24 in the longitudinal direction and appropriately adjusting a weight of the weight member 200. Accordingly, compared with the case where the weight member 200 is not disposed, vibration in the torque rod main body 24 is reduced and NV performance is improved.

In this embodiment, the weight member 200 has a weight that is easily adjustable by adjusting the number of mass dampers 202.

Therefore, the supporting structure for the power unit according to this embodiment ensures effective absorption of collision energy and improvement in NV performance at the same time.

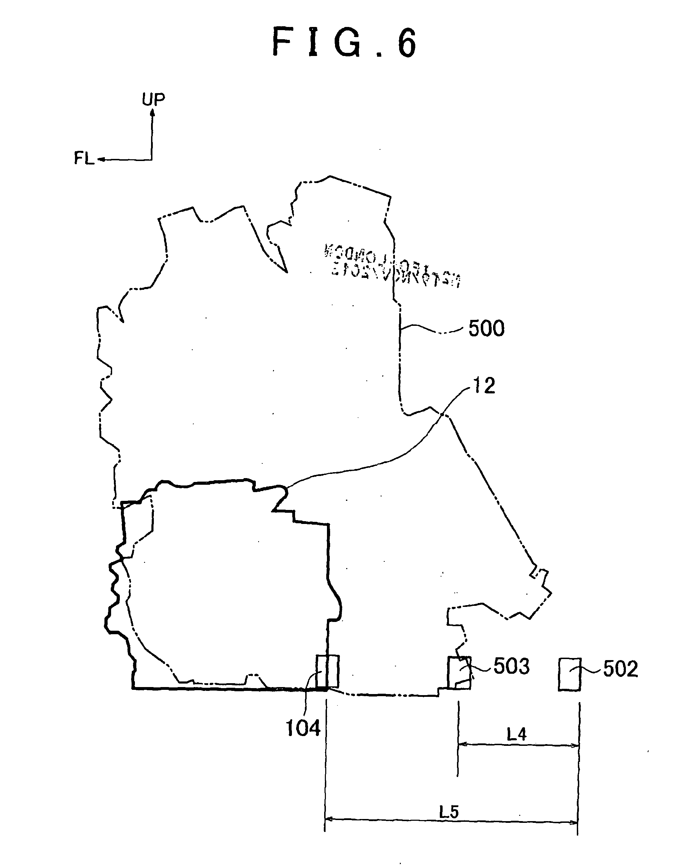

Here, the vehicle according to this embodiment is assumed to be an electric vehicle driven by the electric motor 28. As illustrated in FIG. 6, the motor unit 12 with the electric motor 28 has a smaller unit body than that of the reciprocating engine 500.

In the case of an electric vehicle driven by the motor unit 12 (the electric motor 28) that uses, as a base, a body of an engine vehicle that is driven by a reciprocating engine 500, when a torque rod is mounted on a body-side joint portion 502 that is the same as that for the reciprocating engine 500, the torque rod is long (see comparison of L4 (a distance between an engine-side joint portion 503 and the body-side joint portion 502) and L5 (a distance between the bracket (a motor-side joint portion) 104 and the body-side joint portion 502) in the drawing). As described above, making the torque rod long improves impact absorption performance while it tends to degrade NV performance. However, application of the invention allows improvement in NV performance.

Accordingly, it is possible to improve NV performance even in the case of the electric vehicle, in which the body of the engine vehicle that is driven by the reciprocating engine 500 is used as a base. It is also possible to use a common body between the engine vehicle and the electric vehicle.

The invention is not limited to one embodiment as described above.

For example, while, in the aforementioned embodiment, the bent portion 112, which functions as a bend start portion in the invention, has a bent shape that is convex toward the lower side in the vehicle vertical direction, any other shape or configuration (such as a notch shape, a bulged shape, and a hole shape) may be adopted for the bend start portion as long as the shape or configuration provides a starting point of bending deformation of the torque rod main body 24 when a collision load is applied to the torque rod 23 (the torque rod main body 24) from the front side of the vehicle. The bending direction (on the convex side) of the torque rod main body 24 may be a direction other than the direction toward the lower side in the vehicle vertical direction.

While the bent portion 112 is disposed at the rear side of the weight member 200 in the vehicle longitudinal direction, the invention is not limited to this configuration. The bent portion 112 may be disposed at the front side of the weight member 200 in the vehicle longitudinal direction.

For example, while in the aforementioned embodiment, the motor unit 12 is used for driving the front wheels and housed in the motor room 26 in the front portion of the vehicle, the invention is not limited to this configuration. The motor unit 12 may be used for driving the rear wheel and housed in a motor room within the rear portion of the vehicle.

For example, while in the aforementioned embodiment, the other end portion of the torque rod 23 is fixed to the suspension member rear portion 84, the invention is not limited to this configuration. The other end portion may be fixed to any portion of the vehicle body.

While in the aforementioned embodiment, the torque rod 23 is disposed so that its longitudinal direction coincides with the vehicle longitudinal direction, the invention is not limited to this configuration. For example, the torque rod 23 may be disposed so that its longitudinal direction coincides with the vehicle width direction.

For example, while in the aforementioned embodiment, the power unit is the motor unit 12 including the electric motor 28, the invention is not limited to this configuration. For example, the power unit may be a reciprocating engine. The invention may be applied to what is called a hybrid vehicle that includes equal to or more than two different power sources.

## Claims

1. A vehicular torque rod comprising:
a torque rod main body (24) that has one end portion and the other end portion in a longitudinal direction of the torque rod main body, the one end portion being joinable to a power unit (12), the other end portion being joinable to a body-side joint portion (84), the torque rod main body (24) being suitable for coupling and supporting the power unit (12) with the body-side joint portion (84); and
a weight member (200) disposed on an intermediate portion of the torque rod main body (24) in the longitudinal direction;
**characterized in that**:
the torque rod main body (24) includes a bend start portion (112) that is disposed on one end portion side or the other end portion side in the longitudinal direction with respect to the weight member (200) and that is configured to become a starting point of bending deformation of the torque rod main body (24) when a vehicle collision that causes the bending deformation occurs.

2. The vehicular torque rod according to claim 1, wherein
the bend start portion (112) is a bent portion, at which the torque rod main portion is bent.

3. The vehicular torque rod according to claim 1 or 2, wherein
the weight member (200) has a recess portion (204), and the torque rod main body (24) is inserted into the recess portion (204) and fixed to the weight member (200).

4. The vehicular torque rod according to any one of claims 1 to 3, wherein
a position of a center of gravity of the torque rod main body (24) and a position of a center of gravity of the weight member (200) substantially coincide with each other at least one of in the longitudinal direction and in a cross section taken along a plane perpendicular to the longitudinal direction.

5. The vehicular torque rod according to any one of claims 1 to 4, wherein
the torque rod main body (24) has a U-shaped cross section that is open on a side, on which the torque rod main body (24) becomes convex when the torque rod main body (24) is subjected to bending deformation.

6. A supporting structure for a power unit **characterized by** comprising:
a body-side joint portion (84) disposable at a rear side or a front side of a power unit (12) in a vehicle longitudinal direction when the power unit (12) is housed in a power unit room (26) of a vehicle; and
the vehicular torque rod (23) according to any one of claims 1 to 5 that is suitable for coupling and supporting the power unit (12) with the body-side joint portion (84).

7. A vehicle comprising the supporting structure for the power unit according to claim 6, and
a power unit (12) which includes a driving shaft (34) disposed coaxially with a drive shaft (54, 60) connected to a driving wheel (56, 62).

8. A supporting structure for a power unit **characterized by** comprising:
a body-side joint portion (84) disposable at a rear side or a front side of a power unit (12) in a vehicle longitudinal direction when the power unit (12) is housed in a power unit room (26) of a vehicle; and
the vehicular torque rod (23) according to claim 5 that is suitable for coupling and supporting the power unit (12) with the body-side joint portion (84), wherein
the torque rod main body (24) has a U-shaped cross section that is open on a lower side in a vehicle vertical direction.

9. The supporting structure for the power unit according to claim 8, wherein
the weight member (200) has a recess portion (204) fitted onto the torque rod main body (24) and is fixed to the torque rod main body (24) in a state where the recess portion opens at the lower side in the vehicle vertical direction.

10. The supporting structure for the power unit according to claim 8 or 9, wherein the torque rod main body (24) includes the bend start portion (112) that is disposed on the one end portion side or said the other end portion side in the longitudinal direction of the torque rod main body (24) with respect to the weight member (200) and that is configured to become, at the time of the vehicle collision, a starting point of the bending deformation such that the lower side in the vehicle vertical direction becomes convex.

## Patentansprüche

1. Fahrzeugdrehmomentstange, aufweisend:
einen Drehmomentstangenhauptkörper (24), der einen Endabschnitt und den anderen Endabschnitt in einer Längsrichtung des Drehmomentstangenhauptkörpers hat, wobei der eine Endabschnitt mit einer Leistungseinheit (12) verbindbar ist, wobei der andere Endabschnitt mit einem aufbauseitigen Verbindungsabschnitt (84) verbindbar ist, wobei der Drehmomentstangenhauptkörper (24) für ein Verbinden und ein Stützen der Leistungseinheit (12) mit dem aufbauseitigen Verbindungsabschnitt (84) geeignet ist; und
ein Gewichtsglied (200), das auf einem Zwischenabschnitt des Drehmomentstangenhauptkörpers (24) in der Längsrichtung angeordnet ist;
**dadurch gekennzeichnet, dass**
der Drehmomentstangenhauptkörper (24) einen Biegungsstartabschnitt (112) enthält, der auf der Seite des einen Endabschnitts oder der Seite des anderen Endabschnitts in der Längsrichtung mit Bezug auf das Gewichtsglied (200) angeordnet ist und der konfiguriert ist, um ein Startpunkt einer Biegeverformung des Drehmomentstangenhauptkörpers (24) zu werden, wenn sich eine Fahrzeugkollision ereignet, die die Biegeverformung verursacht.

2. Fahrzeugdrehmomentstange nach Anspruch 1, wobei
der Biegungsstartabschnitt (112) ein gebogener Abschnitt ist, bei dem der Drehmomentstangenhauptkörper gebogen wird.

3. Fahrzeugdrehmomentstange nach Anspruch 1 oder 2, wobei
das Gewichtsglied (200) einen Aussparungsabschnitt (204) hat, und der Drehmomentstangenhauptkörper (24) in dem Aussparungsabschnitt (204) eingesetzt ist und an dem Gewichtsglied (200) befestigt ist.

4. Fahrzeugdrehmomentstange nach einem der Ansprüche 1 bis 3, wobei
eine Position eines Schwerpunkts des Drehmomentstangenhauptkörpers (24) und eine Position eines Schwerpunkts des Gewichtsglieds (200) in mindestens einer der geometrischen Ausgestaltungen, Längsrichtung und Querschnitt, der entlang einer zur Längsrichtung senkrechten Ebene genommen wird, im Wesentlichen miteinander übereinstimmen.

5. Fahrzeugdrehmomentstange nach einem der Ansprüche 1 bis 4, wobei
der Drehmomentstangenhauptkörper (24) einen U-förmigen Querschnitt hat, der auf einer Seite, auf der der Drehmomentstangenhauptkörper (24) konvex wird, wenn der Drehmomentstangenhauptkörper (24) der Biegeverformung ausgesetzt wird, offen ist.

6. Stützstruktur für eine Leistungseinheit, **dadurch gekennzeichnet, dass** diese aufweist:
einen aufbauseitigen Verbindungsabschnitt (84), der an einer Hinterseite oder einer Vorderseite einer Leistungseinheit (12) in einer Fahrzeuglängsrichtung anordenbar ist, wenn die Leistungseinheit (12) in einem Leistungseinheitsraum (26) eines Fahrzeugs untergebracht ist; und
die Fahrzeugdrehmomentstange (23) nach einem der Ansprüche 1 bis 5, die für ein Verbinden und ein Stützen der Leistungseinheit (12) mit dem aufbauseitigen Verbindungsabschnitt (84) geeignet ist.

7. Fahrzeug, das die Stützstruktur für die Leistungseinheit nach Anspruch 6 aufweist, und
eine Leistungseinheit (12), die eine Antriebswelle (34) enthält, die koaxial mit einer Antriebswelle (54, 60), die mit einem Antriebsrad (56, 62) verbunden ist, angeordnet ist.

8. Stützstruktur für eine Leistungseinheit, **dadurch gekennzeichnet, dass** diese aufweist:
einen aufbauseitigen Verbindungsabschnitt (84), der an einer Hinterseite oder einer Vorderseite einer Leistungseinheit (12) in einer Fahrzeuglängsrichtung anordenbar ist, wenn die Leistungseinheit (12) in einem Leistungseinheitsraum (26) eines Fahrzeugs untergebracht ist; und
die Fahrzeugdrehmomentstange (23) nach Anspruch 5, die für ein Verbinden und ein Stützen der Leistungseinheit (12) mit dem aufbauseitigen Verbindungsabschnitt (84) geeignet ist, wobei
der Drehmomentstangenhauptkörper (24) einen U-förmigen Querschnitt hat, der auf einer Unterseite in einer Fahrzeugvertikalrichtung offen ist.

9. Stützstruktur für die Leistungseinheit nach Anspruch 8, wobei
das Gewichtsglied (200) einen Aussparungsabschnitt (204) hat, der auf dem Drehmomentstangenhauptkörper (24) aufmontiert ist, und der an dem Drehmomentstangenhauptkörper (24) in einem Zustand, in dem sich der Aussparungsabschnitt an der Unterseite in der Fahrzeugvertikalrichtung öffnet, befestigt ist.

10. Stützstruktur für die Leistungseinheit nach Anspruch 8 oder 9, wobei
der Drehmomentstangenhauptkörper (24) einen Biegungsstartabschnitt (112) enthält, der auf der Seite des einen Endabschnitts oder der Seite des anderen Endabschnitts in der Längsrichtung des Drehmomentstangenhauptkörpers (24) mit Bezug auf das Gewichtsglied (200) angeordnet ist, und der konfiguriert ist, um zu dem Zeitpunkt der Fahrzeugkollision ein Startpunkt der Biegeverformung zu werden, so dass die Unterseite in der Fahrzeugvertikalrichtung konvex wird.

## Revendications

1. Biellette de reprise de couple pour véhicule comprenant :
un corps principal de biellette de reprise de couple (24) qui comporte une partie d'extrémité et l'autre partie d'extrémité dans une direction longitudinale du corps principal de biellette de reprise de couple, l'une partie d'extrémité pouvant être jointe à une unité de puissance (12), l'autre partie d'extrémité pouvant être jointe à une partie de jonction côté carrosserie (84), le corps principal de biellette de reprise de couple (24) convenant pour coupler et supporter l'unité de puissance (12) avec la partie de jonction côté carrosserie (84) ; et
un élément de poids (200) disposé sur une partie intermédiaire du corps principal de biellette de reprise de couple (24) dans la direction longitudinale ;
**caractérisée en ce que** :
le corps principal de biellette de reprise de couple (24) inclut une partie de début de flexion (112) qui est disposée sur un côté de partie d'extrémité ou l'autre côté de partie d'extrémité dans la direction longitudinale par rapport à l'élément de poids (200) et qui est configurée pour devenir un point de départ de déformation de flexion du corps principal de biellette de reprise de couple (24) quand une collision de véhicule qui cause la déformation de flexion a lieu.

2. Biellette de reprise de couple pour véhicule selon la revendication 1, dans laquelle
la partie de début de flexion (112) est une partie courbée, au niveau de laquelle la partie principale de biellette de reprise de couple est courbée.

3. Biellette de reprise de couple pour véhicule selon la revendication 1 ou 2, dans laquelle
l'élément de poids (200) comporte une partie évidée (204), et le corps principal de biellette de reprise de couple (24) est inséré dans la partie évidée (204) et fixé sur l'élément de poids (200).

4. Biellette de reprise de couple pour véhicule selon l'une quelconque des revendications 1 à 3, dans laquelle
une position d'un centre de gravité du corps principal de biellette de reprise de couple (24) et une position d'un centre de gravité de l'élément de poids (200) coïncident ensemble au moins dans l'une de la direction longitudinale et dans une section transversale prise le long d'un plan perpendiculaire à la direction longitudinale.

5. Biellette de reprise de couple pour véhicule selon l'une quelconque des revendications 1 à 4, dans laquelle
le corps principal de biellette de reprise de couple (24) a une section transversale en forme de U qui est ouverte sur un côté, sur laquelle le corps principal de biellette de reprise de couple (24) devient convexe quand le corps principal de biellette de reprise de couple (24) est soumis à une déformation de flexion.

6. Structure de support pour une unité de puissance **caractérisée en ce qu'**elle comprend :
une partie de jonction côté carrosserie (84) pouvant être disposée d'un côté arrière ou d'un côté avant d'une unité de puissance (12) dans une direction longitudinale de véhicule quand l'unité de puissance (12) est logée dans un logement d'unité de puissance (26) d'un véhicule ; et
la biellette de reprise de couple de véhicule (23) selon l'une quelconque des revendications 1 à 5 qui convient pour coupler et supporter l'unité de puissance (12) avec la partie de jonction côté carrosserie (84).

7. Véhicule comprenant la structure de support pour l'unité de puissance selon la revendication 6, et
une unité de puissance (12) qui inclut un arbre d'entraînement (34) disposé cisaillement avec un arbre d'entraînement (54, 60) connecté à une roue motrice (56, 62).

8. Structure de support pour une unité de puissance **caractérisée en ce qu'**elle comprend :
une partie de jonction côté carrosserie (84) pouvant être disposée d'un côté arrière ou d'un côté avant d'une unité de puissance (12) dans une direction longitudinale de véhicule quand l'unité de puissance (12) est logée dans un logement d'unité de puissance (26) d'un véhicule ; et
la biellette de reprise de couple de véhicule (23) selon la revendication 5 qui convient pour coupler et supporter l'unité de puissance (12) avec la partie de jonction côté carrosserie (84), dans laquelle
le corps principal de biellette de reprise de couple (24) a une section transversale en forme de U qui est ouverte sur un côté inférieur dans une direction verticale de véhicule.

9. Structure de support pour l'unité de puissance selon la revendication 8, dans laquelle
l'élément de poids (200) comporte une partie évidée (204) montée sur le corps principal de biellette de reprise de couple (24) et est fixé sur le corps principal de biellette de reprise de couple (24) dans un état où la partie évidée s'ouvre au niveau du côté inférieur dans la direction verticale de véhicule.

10. Structure de support pour l'unité de puissance selon la revendication 8 ou 9, dans laquelle
le corps principal de biellette de reprise de couple (24) inclut la partie de début de flexion (112) qui est disposée sur un côté de partie d'extrémité ou l'autre côté de partie d'extrémité dans la direction longitudinale du corps principal de biellette de reprise de couple (24) par rapport à l'élément de poids (200) et qui est configurée pour devenir, au moment de la collision du véhicule, un point de départ de déformation de flexion de telle manière que le côté inférieur dans la direction verticale du véhicule devient convexe.
